Europäisches Patentamt

European Patent Office

Office européen des brevets

(11) Publication number: **0 197 749**
**B1**

## (12) EUROPEAN PATENT SPECIFICATION

(45) Date of publication of patent specification: **15.02.89**

(21) Application number: **86302404.8**

(22) Date of filing: **01.04.86**

(51) Int. Cl.⁴: **B 60 J 3/02**

(54) Visor with vanity mirror.

(30) Priority: **01.04.85 US 718716**

(43) Date of publication of application:
**15.10.86 Bulletin 86/42**

(45) Publication of the grant of the patent:
**15.02.89 Bulletin 89/07**

(84) Designated Contracting States:
**DE FR GB IT**

(56) References cited:
**DE-U-1 971 359**
**US-A-2 894 576**

**PATENTS ABSTRACTS OF JAPAN, vol. 8, no.
112 (M-298) 1549r, 25th May 1984; & JP - A - 59 -
20 724 (NISSAN JIDOSHA K.K.) 02-02-1984**

(73) Proprietor: **PRINCE CORPORATION
Windcrest Drive
Holland Michigan 49423 (US)**

(72) Inventor: **Flowerday, Carl Wayne
1219 Heather Drive
Holland Michigan 49423 (US)**

(74) Representative: **Robinson, Anthony John
Metcalf et al
Kilburn & Strode 30 John Street
London, WC1N 2DD (GB)**

Courier Press, Leamington Spa, England.

## Description

The present invention relates to visors with vanity mirrors, for example for an automobile.

U.S.—A—4,227,241 discloses a covered illuminated vanity mirror integrally built into a visor body. Such visors have become popular standard equipment on many vehicles. US—A—4,486,819 discloses a visor having an illuminated vanity mirror which slides out from a lower edge of the visor for use.

JP—A—59/20724 discloses a vehicle visor having those features set out in the preamble to the independent claims of this application. The problem with the visor shown in the prior art document is that, when the mirror is fully extended, it is easily susceptible to being broken, by virtue of its flimsy corner connection to the visor body. In addition, the corner connection is likely to mean that the mirror is liable to vibrate, making it difficult to use.

It is an object of the present invention at least to alleviate these disadvantages, and to provide a visor having a mirror which can smoothly and securely be moved between its stored and use positions.

According to the present invention, a vehicle visor is characterised by those features set out in the characterising portion of the independent claims of this application; in particular, the cooperating arcuate slot and guide pin act to avoid vibration.

The invention may be carried into practice in various ways and one specific embodiment will now be described by way of example, with reference to the drawings, in which:

Figure 1 is a persepctive view of a visor embodying the present invention installed in a vehicle and shown in a lowered position;

Figure 2 is a perspective view of the visor shown in Figure 1 with the illuminated vanity mirror partially withdrawn from the visor body;

Figure 3 is a perspective view of the visor shown in Figure 1 with the illuminated vanity mirror in the lowered use position;

Figure 4 is a perspective, partially broken away view of the visor of Figure 1 showing the mounting of the illuminated vanity mirror assembly to the visor body;

Figure 5 is a rear perspective view of the visor shown in Figure 3;

Figure 6 is an enlarged, fragmentary, cross section taken along section line VI—VI of Figure 4;

Figure 7 is an enlarged, fragmentary, front elevational view of a portion of the illumination means employed in the preferred embodiment of the present invention;

Figure 8 is an electrical circuit diagram in schematic form of the illumination circuit employed in the preferred embodiment of the present invention;

Figure 9 is an enlarged, fragmentary, cross-sectional view of the pivot mounting means taken along section lines IX—IX of Figure 5; and

Figure 10 is an enlarged, fragmentary, front elevational view of the switch associated with the visor of an embodiment of the present invention.

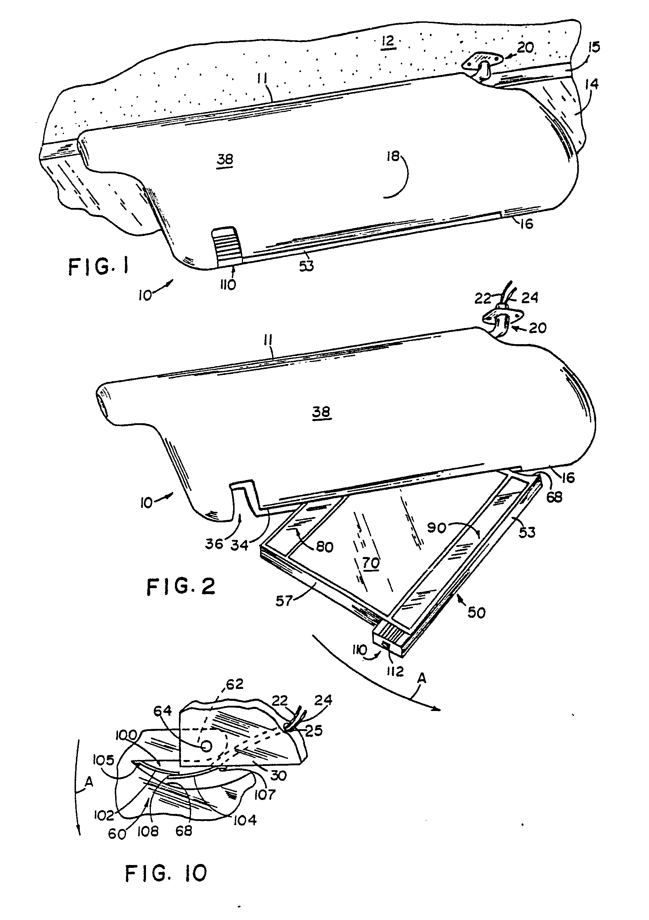

Referring initially to Figures 1—3, there is shown a preferred embodiment of the invention comprising a visor 10 which, as seen in Figure 1, is mounted to the roof 12 of a vehicle on the passenger side just above the vehicle windshield (windscreen) 14. The visor, as seen in Figures 1—3, is shwon in a lowered use or sun blocking position, and in this position includes an upper edge 11 extending generally parallel to the trim 15 between the vehicle roof 12 and windshield 14. The visor also has a lower edge 16 and a rear surface 18 which faces towards the vehicle occupant when the visor is in the lowered use position, as illustrated. The visor 10 is mounted to the vehicle through an elbow bracket assembly 20 which is secured within the visor by a visor control torque fitting which can be of the type disclosed in US—A—4,500,131.

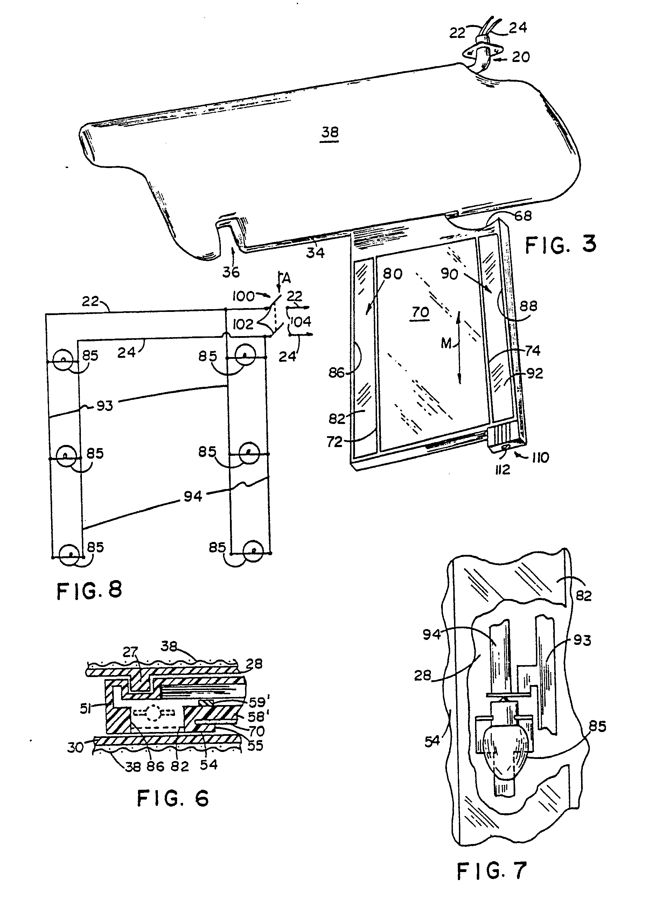

The pivot arm assembly 20 secures the visor to the vehicle roof 12 permitting the visor to be moved between a lowered use position, as illustrated, and a raised stored position and held securely in either of these positions or any adjustable intermediate position. The elbow assembly 20 is, in the embodiment shown, hollow, to permit a pair of conductors 22 and 24 to extend therethrough and attach to the vehicle's electrical system for providing operation power to an illuminated vanity mirror panel assembly 50, as described in greater detail below in conjunction with Figures 3, 7 and 8.

The visor includes a visor body or core 26 (as best seen in Figure 5) which can be molded of a polymeric material such as polypropylene formed in two halves including a front wall 28 and a rear wall 30. The visor body includes a recess 35 for receiving the pivotally mounted panel assembly 50. In the embodiment shown, recess 32 defines a generally rectangular storage compartment within the visor body. As access opening 34 communicates with the compartment 32 and extends along a portion of the lower edge 16 of the visor, as best seen in Figure 2. The visor body 26 also includes a latch recess 36 including, as seen in Figure 4, a sidewall 35 having an aperture 37 formed therein for receiving a locking dog 112 associated with the latch 110 of the illuminated vanity mirror panel assembly 50, as described below. The visor body or core 26 is covered with a suitable upholstery fabric 38 so that the visor appearance conforms to that of the upholstery of the vehicle in which the visor is installed.

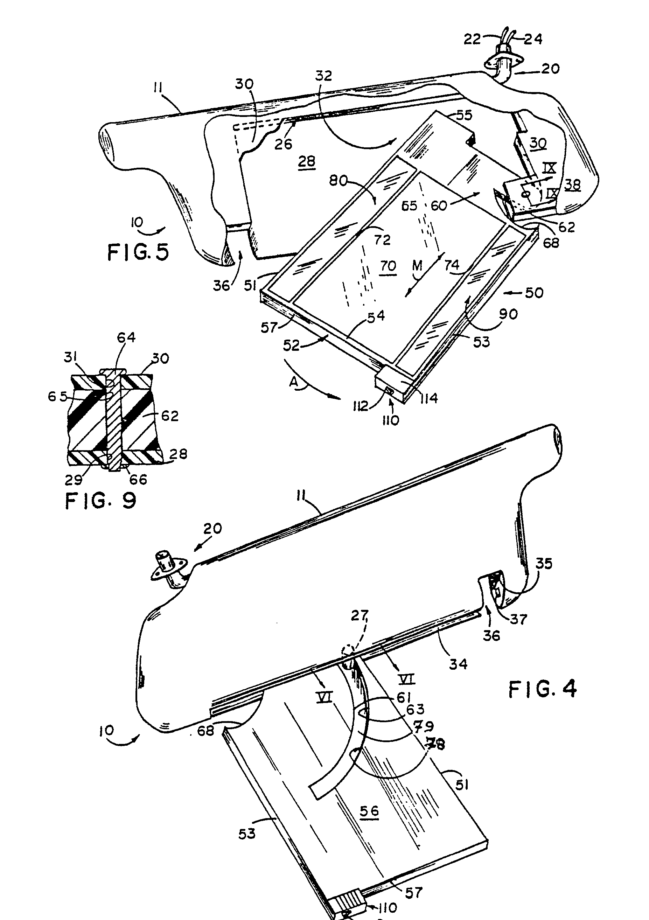

The vanity mirror panel assembly 50 includes a frame 52 (Figure 5) which is generally rectangular and made of an integrally molded polymeric material such as a polycarbonate. The frame 52 includes sidewalls 51 and 53, a front wall 54, rear wall 56 and upper and lower edges 55 and 57, respectively. The upper end of the frames 52 includes an integral mounting bracket 60 defined by an extending mounting flange 62 which fits between the panels 28 and 30 of the visor body, as best seen in Figures 5 and 9, and is pivotally coupled to the visor body between its panels by means of a pivot pin 64. The pin 64 extends through an aperture 31 in the panel 30, through an aperture 65 in thlange 62 and an aperture 29 in the panel 28 and is secured therein by means of a suitable fastening nut 66 to permit the illuminated vanity mirror panel 50 to pivot with respect to the visor body between its stored position, illustrated in Figure 1, and its lowered use position, illustrated in Figure 3.

The integral mounting bracket 60 also includes a crescent-shaped slot 68 formed through the solid integral mounting bracket 60 to partially circumscribe the arm 62 and provide clearance around the visor body, as best seen in Figure 5, for the panel assembly as it is extended to the lowered use position. This clearance maximizes the available space for use of a mirror 70 in panel assembly 50. The mirror is secured to the rear of the front panel 54 behind a generally rectangular aperture 55 (Figure 5) formed therein by means of a backing panel 58 and suitable heat stake tabs 59 (Figure 6) extending along the peripheral edges of the mirror. The backing panel 58 (Figure 6) provides safety protection through an adhesive and/or cushioned surface interface between it and the mirror. The panel 58 is also supported around the periphery of the opening 55 in the front wall 54 by the tabs 59. A mirror 70 is of the generally rectangular shape and includes a major axis identified by arrows M in Figures 3 and 5 which extends generally vertically when the mirror is in the lowered use position, as seen in Figure 3. The dimensions of the mirror provide an aspect ratio of about 1,5×2 to 2×3 (width to height) which generally conforms to the aspect ratio of an average individual's face. As such, with the mirror oriented as shown in Figure 3, a person using the mirror can simultaneously view substantially his entire facial area.

Adjacent side edges 72 and 74 (Figure 5) of the mirror 70 are elongated, narrow, rectangular illumination means 80 and 90 in the preferred embodiment. These illumination means 80 and 90 each include a transparent lens 82 and 92, respectively, for directing illumination outwardly from lamps 85 (Figures 7 and 8) positioned behind each of the lenses and in spaced relationship to provide even illumination for use of the mirror. The lenses 82 and 92 can be of the Fresnel-type disclosed in US—A—4,227,241 to direct light outwardly and toward the centre and in front of the mirror for even illumination of a person's face when using the mirror. The lamps are supported by integral sockets and conductors 93 and 94 which are disclosed in greater detail in US—A—4,486,819.

The conductors 93 and 94 extend along and behind the lenses 82 and 92 and are secured to the front wall 54 of the frame 50 in a conventional manner such as by heat staking to apertures formed in the flat conductors 93 and 94 at spaced locations. The lenses 82 and 92 are snap-mounted to the edges of elongated, rectangular apertures 86 and 88 (Figure 3) formed in the front wall 54 of the frame 50 to provide access for removal and replacement of the lamps 85 as required. The conductive strips 93 and 94 are coupled to the flexible conductors 22 and 24, as shown in Figures 8 and 10, by a two pole single-throw switch 100 having a pair of contacts 102 mounted to the lower edge of the arm 62 and a second pair of contacts 104 mounted to the lower edge of the visor body, as shown only in Figure 10. The pairs of contacts 102 and 104 are made of a spring conductive material such as beryllium copper and are heat staked as indicated at fasteners 105 and 107 to the panel assembly 50 and visor body 26. The conductors 22 and 24 extend through an aperture 25 formed through the visor body and extend through the hollow elbow assembly bracket 20 for coupling to the vehicle's electrical supply system. The switch 100 provides an automatic switch closing by contacting tips 108 of associated ones of each contact 102 and 104, as illustrated in Figure 10, when the panel assembly 50 is pivoted, as indicated by arrow A, to an open position. When the panel 50 is stored, the contacts 102 move away from the contacts 104 to automatically interrupt the electrical current path through the bulbs 85.

To provide guide and support means for the controlled motion of the panel assembly 50 between the closed position, illustrated in Figure 1, and the open position, illustrated in Figure 3, guide means, as best seen in Figures 4 and 6, are provided and include an arcuate slot 78 integrally formed in the rear surface 56 of the frame 52. The slot 78 is defined by a floor 79 and integral sidewalls 61 and 63. Extending within the arcuate guide slot 78 is a guide pin 27 which extends inwardly from the inner rear surface 28 of the visor body and is fixed wizh relationship to the visor body. As the panel assembly 50 pivots about the pivot pin 64, therefore, the guide slot 78 which circumscribes the pin 27 travels within the visor body guided by the pin 27 to stabilize and control motion of the panel assembly 50 as it is moved between the closed and open positions.

In order to hold the panel assembly in the closed position, as shown in Figure 1, the latch assembly 110 is mounted to the lower right corner of the mirror assembly and includes the latching dog 112 controlled by a push-button actuator 114 to selectively and lockably engage the aperture 37 formed in the recess 36 in the visor body. The latching mechanism 110 can be substantially identical to that disclosed in US—A—4,486,819.

## Claims

1. A vehicle visor (10) being a having body (26) defining a recess (32) with at least an open edge (34) at the lower edge of the visor body for access to the recess; a mirror panel (50) having a mirror (70) on one side, the panel being shaped to fit within the recess; means (64) for pivotally coupling the panel to the visor body for pivotal movement in a plane substantially parallel to the plane of the visor body between a stored position within the recess (32) adn a use position lowered below the visor body; characterised in that one of the panel (50) and the visor body (26) has an arcuate guide slot (78) formed therein in a side opposite the mirror (70) and remote from the pivot coupling means (64), and the other of the panel or the visor body has a guide pin (27) extending into the slot (78) to controllably guide the pivotal motion of the panel.

2. A visor as claimed in claim 1 in which the arcuate slot (78) is in the panel (50), and the guide pin (27) is on the visor body (26).

3. A visor as claimed in claim 1 or claim 2 in which the panel (50) is arranged to travel through an arc of about 90° as it moves between the stored and the use positions.

4. A visor as claimed in any one of the preceding claims in which the mirror (70) is elongate and has a major axis (M) which extends generally vertically when the panel (50) is in the use position.

5. A visor as claimed in any one of the preceding claims in which the panel (50) includes illuminating means (80, 90) positioned adjacent opposite sides of the mirror (70) for directing illumination outwardly therefrom to facilitate use of the mirror in low ambient light conditions.

6. A visor as claimed in claim 5 in which the illumination means (80, 90) are elongate and extend along sides (72, 74) of the mirror (70) which are generally vertical when the mirror is in the use position.

7. A visor as claimed in claim 5 or claim 6 having switch means (100) which are arranged to be actuated when the panel (50) is pivoted to a use position, for supplying electrical power to the illumination means (80, 90).

8. A visor as claimed in any one of the preceding claims in which one of the panel (50) or visor body (26) includes a releasable latch (110) for releasably locking the panel in the stored position.

9. A visor as claimed in any one of the preceding claims in which the panel (50) includes a generally crescent-shaped slot (68) extending generally between the mirror (70) and the pivot means (64) to provide clearance between the panel (50) and the visor body (26) as the panel is lowered to the use position.

10. A vehicle visor (10) having a visor body (26) defining a recess (32), with at least an open edge (34) at the lower edge of the visor body for access to the recess; a mirror panel (50) having a mirror (70) on one side, the panel being shaped to fit within the recess and including pivot means (64) adjacent one corner thereof for coupling the panel to the visor body with the said corner adjacent the open edge (34) for pivotal movement in a plane substantially parallel to the plane of the visor body between a store position within the recess (32) and a use position lowered below the visor body; characterised in that one of the panel (50) and the visor body (26) has an arcuate slot (78) formed therein and the other of the panel or the visor body has a guide pin (27) extending into the slot for guidably controlling the motion of the panel as it moves between the stored and the use positions; and in that the panel means further includes illuminating means (80, 90) positioned adjacent opposite sides of the mirror (70) for directing illumination outwardly therefrom to facilitate use of the mirror in low ambient light conditions.

**Patentansprüche**

1. Fahrzeug-Sonnenblende (10) mit einem Körper (26), der eine Vertiefung (32) bildet, die zumindest am unteren Rand des Blendenkörpers einen offenen Rand (34) zum Zugang zur Vertiefung bildet; einem Spiegelpaneel (50), das auf einer Seite einen Spiegel aufweist und so geformt ist, daß es in die Vertiefung paßt; und einer Vorrichtung (64) zum schwenkbaren Koppeln des Paneels mit dem Blendenkörper für eine Schwenkbewegung in einer zur Ebene des Blendenkörpers im wesentlichen parallelen Ebene zwischen einer Ruhestellung in der Vertiefung (32) und einer unter den Blendenkörper abgesenkten Gebrauchsstellung; dadurch gekennzeichnet, daß das Paneel (50) oder der Blendenkörper (26) in einer dem Spiegel (70) entgegengesetzten Seite und von der Schwenkopplungsvorrichtung (64) entfernt eine bogenförmige Führungsnut (78) aufweist und das andere dieser Teile einen Führungsstift (27) hat, der sich zur kontrollierten Führung der Schwenkbewegung des Paneels in die Nut (78) erstreckt.

2. Sonnenblende nach Anspruch 1, bei der sich die bogenförmige Nut (74) im Paneel (50) und der Führungsstift (27) am Blendenkörper (26) defindet.

3. Sonnenblende nach Anspruch 1 oder 2, bei der das Paneel (50) für einen Weg über einen Bogen von etwa 90° bei der Bewegung zwischen der Ruhestellung und der Gebrauchsstellung ausgebildet ist.

4. Sonnenblende nach einem der vorhergehenden Ansprüche, bei der der Spiegel (70) länglich ist und eine Hauptachse (M) aufweist, die im wesentlichen vertikal verläuft, wenn sich das Paneel (50) in der Gebrauchsstellung befindet.

5. Sonnenblende nach einem der vorhergehenden Ansprüche, bei der das Paneel (50) Beleuchtungsvorrichtungen (80, 90) aufweist, die auf entgegengesetzten Seiten des Spiegels (70) angeordnet sind, um Licht hiervon nach außen zu richten und die Benutzung des Spiegels bei schlechten Umgebungslichtverhältnissen zu erleichtern.

6. Sonnenblende nach Anspruch 5, dadurch gekennzeichnet, daß die Beleuchtungsvorrichtungen (80, 90) länglich sind und sich längs der Seiten (72, 74) des Spiegels (70) erstrecken, welche im wesentlichen vertikal sind, wenn sich der Spiegel in der Gabrauchsstellung befindet.

7. Sonnenblende nach Anspruch 5 oder 6 mit Schaltvorrichtungen (10), die so ausgebildet sind, daß sie betätigt werden, um den Beleuchtungsvorrichtungen (80, 90) elektrische Leistung zuzuführen, wenn das Paneel (50) in die Gebrauchsstellung geschwenkt wird.

8. Sonnenblende nach einem der vorhergehenden Ansprüche, bei der das Paneel (50) oder der Blendenkörper (26) eine lösbare Klinke (110) aufweist, um das Paneel in der Ruhestellung lösbar zu arretieren.

9. Sonnenblende nach einem der vorhergehenden Ansprüche, bei der das Paneel (50) einen im wesentlichen sichelförmigen Schlitz (68) aufweist, der sich im wesentlichen zwischen dem Spiegel (70) und der Schwenkvorrichtung (64) erstreckt, um einen Zwischenraum zwischen dem Paneel (50) und dem Blendenkörper (26) zu schaffen, wenn das Paneel in die Gebrauchsstellung abgesenkt wird.

10. Fahrzeug-Sonnenblende (10) mit einem Blendenkörper (26), der eine Vertiefung (32) bildet, die zumindest am unteren Rand des Blendenkörpers einen offenen Rand (34) zum Zugang zur Vertiefung aufweist; einem Spiegelpaneel (50), das an einer Seite einen Spiegel (70) aufweist und so geformt ist, daß es in die Vertiefung paßt und bei einer Ecke, die dem offenen Rand (34) benachbart ist, eine Schwenklagervorrichtung (64) aufweist, um das Paneel mit dem Blendenkörper für eine Schwenkbewegung in einer zur Ebene des Blendenkörpers im wesentlichen parallelen Ebene zwischen einer Ruhestellung in der Vertiefung (32) und einer unter den Blendenkörper abgesenkten Gebrauchsstellung zu koppeln, dadurch gekennzeichnet, daß im Paneel (50) oder dem Blendenkörper (26) eine bogenförmige Nut (78) gebildet ist und daß das andere dieser Teile einen Führungsstift (27) aufweist, der sich in die Nut erstreckt, um die Bewegung des Paneels geführt zu steuern, während es sich zwischen der Ruhestellung und der Gebrauchstellung bewegt; und daß die Paneelanordnung außerdem Beleuchtungsvorrichtungen (80, 90) aufweist, die bei entgegengesetzten Seiten des Spiegels (70) angeordnet sind, um Licht von diesem nach außen zu richten, um die Benutzung des Spiegels bei schlechten Umgebungslichtverhältnissen zu erleichtern.

## Revendications

1. Un para-soleil (10) de véhicule comportant un corps (26) définissant un évidement (32) avec au moins un bord ouvert (34) au bord inférieur, du corps de pare-soleil pour accéder à l'évidement; un panneau (50) de miroir comportant un miroir (70) sur un côté, le panneau étant d'une forme apte à s'ajuster à l'intérieur de l'évidement; des moyens (64) pour coupler en pivotement le panneau au corps de pare-soleil en vue d'un mouvement de pivotement dans un plan sensiblement parallèle au plan du corps de pare-soleil entre une position de dégagement à l'intérieur de l'évidement (32) et une position abaissée d'utilisation en dessous du corps de pare-entail; caractérisé en ce que l'un des éléments parmi le panneau (50) et le corps (28) de pare-soleil possède une fente (78) de guidage en arc qui y est ménagée dans un côté opposé au miroir (70) et qui est distante des moyens (64) de couplage à pivot, et en ce que l'autre élément parmi le panneau ou le corps de pare-soleil comporte un ergot (27) de guidage s'étendant dans la fente (78) pour guider de façon commandée le mouvement de pivotement du panneau.

2. Un pare-soleil selon la revendication 1 dans lequel la fente (78) en arc on trouve dans le panneau (50), et l'ergot (27) de guidage est sur le corps (26) de pare-soleil selon la revendication 1 ou 2 dans lequel le panneau (50) est disposé pour parcourir un arc d'environ 90° quand il se déplace entre les positions de dégagement et d'utilisation.

4. Un pare-soleil selon l'une quelconque des précédentes revendications dans lequel le miroir (70) est allongé et comporte un axe principal (P) qui s'étend généralement verticalement quand le panneau (50) est en position d'utilisation.

5. Un pare-soleil selon l'une quelconque des précédentes revendications dans lequel le panneau (50) comprend des moyens (80, 90) d'éclairage positionnés contigue aux côtés opposés du miroir (70) pour diriger l'éclairage vers l'extérieur de celui-ci pour faciliter l'utilisation de miroir dans des conditions de faible lumière ambiante.

6. Un pare-soleil selon la revendication 5 dans lequel les moyens (80, 90) d'éclairage sont allongés et s'étendent la long des côtés (72, 74) du miroir (70) qui sont généralement verticaux quand le miroir est dans la position d'utilisation.

7. Un pare-soleil selon la revendication 5 ou 6 comportant des moyens (100) de commutation qui sont disposés pour être actionnés quand le panneau (50) est pivoté dans une position d'utilisation, pour fournir de l'énergie électrique aux moyens (80, 90) d'éclairage.

8. Un pare-soleil selon l'une quelconque des précédantes revendications dans lequel l'un des éléments: panneau (50) ou corps (26) de parasoleil comprend un verrou libérable (110) pour verrouiller le panneau dans la position de dégagement en pouvant le libérer.

9. Un pare-soleil selon l'une quelconque des précédentes revendications dans lequel la panneau (50) comprend une fente (68) en forme générale de cruissant s'étendant généralement entre le miroir (70) et les moyens (64) de pivotement pour ménager un jeu entre le panneau (50) et la corps (26) de pare-soleil quand le panneau est abaissé vers sa position d'utilisation.

10. Un pare-soleil (10) de véhicule comportant un corps (26) de pare-soleil définissant un évidement (32), avec au moins un bord ouvert (34) au bord inférieur du corps de para-soleil pour accéder à l'évidement; un panneau (50) de miroir comportant un miroir (70) sur un côté, le panneau étant d'une forme apte à s'ajuster à l'intérieur de l'évidement et comportant des moyens (64) de pivotement contigue à l'un de ses coins pour coupler la panneau au corps de pare-soleil avec ledit coin contigu au bord ouvert (34) en vue d'un mouvement de pivotement dans un plan sensiblement parallèle au plan du corps de pare-soleil entre un position de dégagement à l'intérieur de l'évidement (32) et une position d'utilisation abaissée au-dessous du corps de pare-soleil; caractérisé en ce l'un des éléments parmi le panneau (50) et le corps (26) de pare-soleil possède une fente (78) en arc qui y est ménagée, et en ce que l'autre élément parmi le panneau ou le corps de pare-soleil comporte un ergot (27) de guidage s'étendant dans la fente pour commander en pouvant le guider le mouvement du panneau quand il se déplace entre les positions de dégagement et d'utilisation; et en ce que les moyens formant panneau comprennent de plus den moyens (80, 90) d'éclairage positionnée contigus aux côtés opposés du miroir (70) pour diriger l'éclairage vers l'extérieur de celui-ci pour faciliter l'utilisation du miroir dans des conditions de faible lumière ambiante.

EP 0 197 749 B1

FIG. 1

FIG. 2

FIG. 10

1

EP 0 197 749 B1

FIG. 3

FIG. 8

FIG. 6

FIG. 7

2

EP 0 197 749 B1

FIG. 5

FIG. 9

FIG. 4

3